# EUROPEAN PATENT APPLICATION

(11) **EP 1 767 465 A1**
(43) Date of publication of application: **28.03.2007**
(21) Application number: 06254922.5
(22) Date of filing: 22.09.2006
(51) Int. Cl.: B65D 65/46, B65D 77/20, C08J 5/12

(54) **Film for packaging**

(30) Priority: 22.09.2005 GB 0519320
(71) Applicant: Paragon Flexible Packaging Limited, Sanders Road Heapham Road Industrial Estate Gainsborough, Lincolnshire DN21 1XP (GB)
(72) Inventor: Kendall, Anthony E Broom Cottage, Cheshire WA 16 9PR (GB)
(74) Representative: Foot, Paul Matthew James

(57) **Abstract**

A polymerised lactic acid resin film for use in product packaging, the film comprising a peelable region configured to form a peelable connection to a polymerised lactic acid resin substrate when brought into contact and upon heating, the region comprising an intermittent heat-resistant coating to prevent heat sealing occurring in part of the region, so as to permit a subsequent separation of the film from the substrate by a peeling mechanism

## Description

The present invention relates to a film for use in packaging, particularly, but not exclusively, for the packaging of foods. The present invention also relates to packaging articles that incorporate the film and a method of manufacturing the film.

It is well known to package foodstuffs in "pillow" type bags manufactured from a sheet or film of plastics material in which the bag is simultaneously formed and filled in vertical form fill and seal (VFFS) machines. It is also known to package articles in a semi-rigid tray formed from plastics material, which is covered with a lid of plastics film in a tray sealing packaging machine. Trays are also packed in bags on horizontal form fill and seal (HFFS) machines.

The plastics materials typically used in such films and trays are derived from petrochemical sources (e.g. polypropylene, polyamide, polyethylene or polyester). Whilst such films are cost-effective, they are derived from non-renewable sources and take many years to biodegrade, if at all.

A European Union Norm EN 13432 has been introduced that provides definitions of biodegradability and compostability for packaging materials that are from renewable sources. Broadly, this standard stipulates that 95% of a particular article of packaging must be industrially compostable at 38°C and it must have derived from renewable crop-based resources that re-grow in 1-7 years, in order to claim compliance with the Norm. Of the remaining 5%, no single packaging constituent is permitted to comprise more than 1% of the overall weight.

It is possible to manufacture packaging to meet this standard by using polymerised lactic acid (PLA) resin as the raw material for films and trays. PLA resin is manufactured from plant-based materials such as corn starch or sugar beet. Well-known manufacturers of the resin include Cargill subsidiary NatureWorks LLC and Hycail BV. NatureWorks LLC sells PLA resin under the trade name NatureWorks^{RTM}. Hycail BV sells PLA resin under the trade name Hycail^{RTM}

The physical properties of PLA resin differ markedly from standard petrochemical-based plastics. In particular, PLA resin has a lower melting point, is stiffer, and has higher clarity than petrochemical-based plastics used in packaging films and trays.

With known petrochemical-based packaging, it is possible to hermetically seal the interior of a film based package from the surrounding atmosphere, but to provide a "peelable" film-to-substrate connection to enable users to access the interior easily. This is achieved by applying a peelable lacquer to one face of the connection or building a peelable layer into the film or substrate. The two faces are then compressed together and heated to form the peelable seal, as a result of the lacquer or peelable layer melting and adhering the faces together. When a user peels back the film, the seal typically fails along the lacquer or layer (i.e. the lacquer or layer is left on both faces that previously formed the seal), or strips entirely from one face.

The force required to peel back the film needs to fall within a relatively narrow range. If the seal is too weak then it may not withstand loads arising during distribution of the packaged product, and thus fails prematurely. On the other hand, if the load is too high, the consumer will be unable to open the package easily, or the package will fail in a different, undesirable manner (e.g. tearing off of a peel tab rather than opening).

In laboratory testing, the peel load is typically tested by sealing together two 25mm wide film strips in the manner to be tested, securing the free ends of the strips in separate, opposed jaws, and retracting the jaws away from each other. Typically, for such a 25mm strip, a load in the range of 600 to 900 grams (5.9 to 8.8 N) to initiate peeling is desirable.

It has been found that known peel sealing techniques cannot be employed with PLA film-to-film and film-to-tray connections in view of the different physical properties of PLA film. On the one hand, the lacquer used for standard peel sealing of petrochemical based films is not compatible with PLA films and trays (and is not biodegradable). On the other hand, heat sealing PLA film to a PLA tray or PLA film without any lacquer or other coating results in a weld seal that is impossible to peel. Thus, an object of the present invention is to provide a peelable seal for PLA films.

One aspect of the present invention provides a polymerised lactic acid resin film for use in product packaging, the film comprising a peelable region configured to form a peelable connection to a polymerised lactic acid resin substrate when brought into contact and upon heating, the region comprising an intermittent heat-resistant coating to prevent heat sealing occurring in part of the region, so as to permit a subsequent separation of the film from the substrate by a peeling mechanism.

A second aspect of the present invention provides a method of manufacturing a polymerised lactic acid resin film having a peelable region, the method comprising the step of applying an intermittent heat resistant coating to the film to provide the region.

Embodiments of the present invention will now be described, by way of example only, with reference to the accompanying drawings in which:
Fig. 1 is a perspective view of a pillow bag having a peelable seal in accordance with an embodiment of the present invention;
Fig. 2 is a perspective view of a lidded tray having a peelable seal in accordance with another embodiment of the present invention;
Fig. 3 is an enlarged plan view of a portion of film according to an embodiment of the present invention; and
Figs. 4 to 6 illustrate alternative overprinted lacquer shapes according to further embodiments of the present invention.

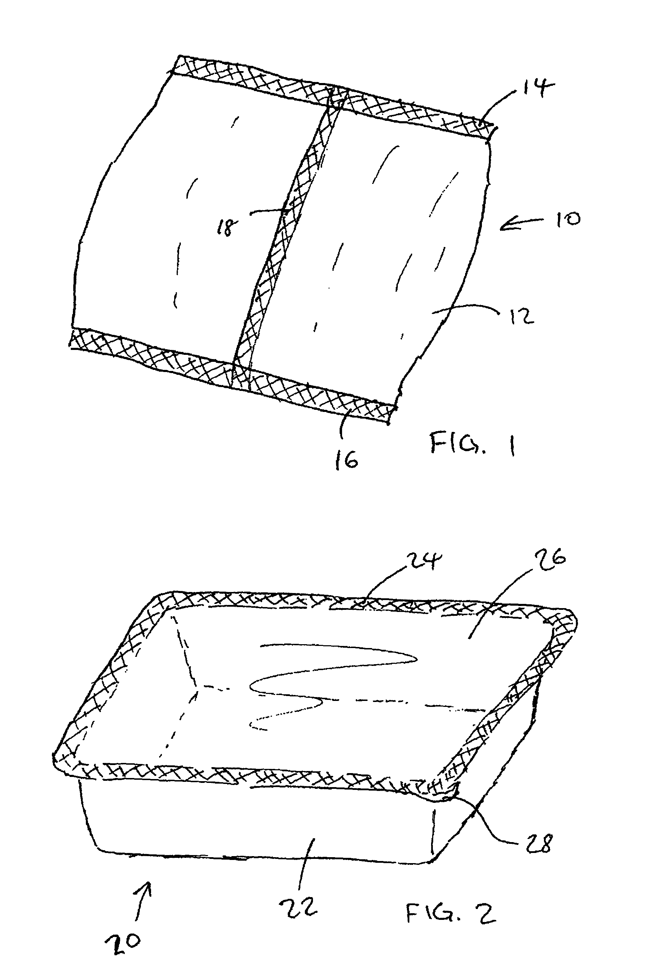

Fig. 1 illustrates a pillow bag 10 comprising PLA film 12 sealed to form a bag via peelable face-to-face seals 14 and 16 at the top and bottom of the bag respectively. A vertical seam 18 extends between the top and bottom seals that may also be peelable. Each seal 14, 16 and 18 is, in this embodiment, 15mm wide. The bag 10 may be formed using standard vertical form fill and seal (VFFS) or horizontal form fill and seal (HFFS) packaging machine.

The film 12 is flexible and may be transparent, translucent or opaque, and it may further be pre-printed with product information, nutritional information and the like or may be blank. Typically, the film will have a thickness of 35 µm, although this varies from country to country and application to application within a range of 20 to 50 µm, and is manufactured using a biaxial extrusion process. The film may also be provided with anti-mist coatings, modified atmosphere packaging (MAP) holes or the like. The width of the film will vary according to its intended use. Such film may be supplied by Treofan UK Limited of Swindon, Wiltshire, United Kingdom under the trade name BIOPHAN^{RTM}.

Turning to Fig. 2, a lidded tray 20 is illustrated. The tray comprises a tray body 22, which is again formed from PLA resin sheets thermoformed to provide the semi-rigid tray body 22 illustrated. Such trays may be supplied by the Autobar Group Limited of Brentford, Middlesex, United Kingdom. The tray body 22 comprises a horizontal peripheral lip 24 projecting outwardly from the entire upper edge of the tray 22. On standard trays, the width of the lip is typically 5mm, but in this embodiment a tray with a lip width of 10mm is used to provide the desired peel properties. The lip 24 has a typical thickness of 350 µm.

A PLA resin film 26 has been applied to the lip in a standard tray sealing packaging machine, by being heat sealed around the entirety of lip 24. A tab 28 is provided at one corner of the lid 26, which has not been heat sealed to the underlying lip in order to enable a consumer to lift the tab 28 and commence the peeling back of the lid in order to access the interior of the tray 20. In other embodiments, such tabs may be provided on two or more corners.

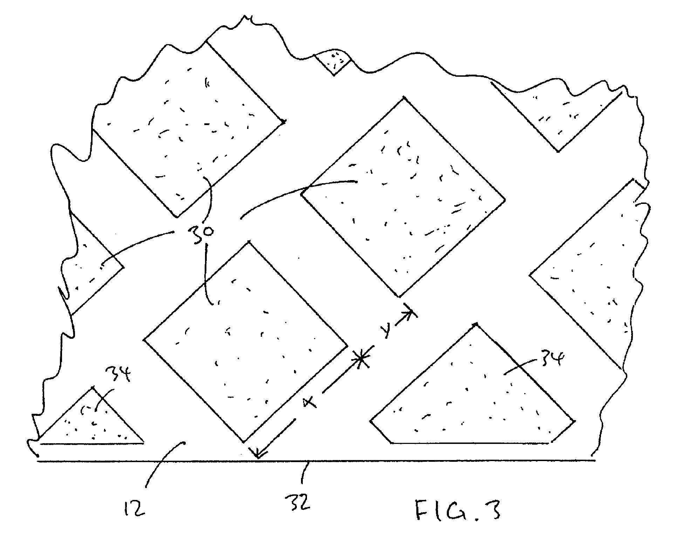

Fig. 3 is an enlarged view of a portion of film 12 of Fig. 1. The film 26 for the lid of the tray 20 may however be identical. The film 12 has been overprinted with a coating of heat-resistant lacquer in an intermittent manner to form a peelable region. A suitable lacquer may be a standard nitrocellulose/polyurethane lacquer supplied by Sun Chemical Limited of Watford, Hertfordshire, United Kingdom, such as RB600 lacquer. The lacquer may be applied in a known manner using a flexographic or gravure process.

In this embodiment, the intermittent lacquer coating comprises a plurality of individual diamond-shaped elements 30 arranged in a regular repeating spaced pattern, with adjacent rows offset. In this embodiment the dimension X of each side of a diamond is double the gap Y between adjacent diamonds 30. In this embodiment the dimension X is 2 mm and the gap Y is 1 mm. This results in a ratio of coated area to non-coated area of 1:1.25. This ratio may vary between 1:2 to 1:0.75, more preferably 1:1.5 to 1:1, even more preferably 1:1.2 to 1:1.3.

In order to maintain the repeating pattern up to the edge 32 of the film 12, triangular elements 34 are provided proximate the edge. In the case of the pillow bag 10, the pattern of elements is printed over, at most, half of the face of the film 12 that will form the interior of the bag. It is not desirable to print the entire film 12 since both faces to be sealed would then be partially covered in lacquer, which, if the elements 30 were not in perfect register, would weaken the seal. However, the pattern may, in other embodiments, only be provided where a seal is to be formed.

In the case of film 26 for trays 20 the repeating pattern may be printed over the entirety of a film, or may only be printed in those areas where sealing is needed.

A package having a peelable seal is made using film 12 as follows:

The area of film 12 to be sealed is brought into contact with the substrate against which the seal is to be made. The substrate may be a further uncoated (with lacquer) sheet of film 12 or a tray lip. The film 12 and substrate is then clamped between a heat sealing jaw of the appropriate shape and dimensions (e.g. a 15 mm wide strip having length that is at least equal to the bag width in the case of the pillow bag of Fig. 1 or a 10 mm wide generally oblong shape in the case of the tray of Fig. 2).

Three parameters can be altered in the heat sealing process to achieve the desired seal properties, namely jaw pressure, temperature of the heat sealing jaws and the dwell time of the film and substrate between the jaws. It will be appreciated that parameters may be altered in an infinite number of ways.

However, it has been found that to create a peelable seal exhibiting the desired peel load range of 600 grams to 900 grams per 25mm, a pressure in the range of 1 to 7 bar, preferably 1.25 to 3 bar, even more preferably 1.4 bar may be used. The temperature of the jaws is preferably in the range of 95 to 115°C, more preferably 105 to 112°C even more preferably 110°C. The dwell time is preferably in the range of 0.3 to 1 secs, more preferably 0.4 to 0.7 secs, even more preferably 0.5 secs.

The most preferable parameters listed above have been found to be the optimum for film-to-film seals of 35 µm film in which one piece of film has 2 mm diamond lacquer elements 30 applied thereto with 1mm spacings therebetween.

Heat sealing the film in this way melts and fuses the unlacquered film to the substrate. However, because the fusing does not occur over the entirety of the seal, peeling is possible without tearing of the film. Thus, the approach used is contrary to that employed with petrochemical based films, in which only the peelable lacquer or peelable layer melts to fuse film to substrate.

Similar parameters may be used for film to tray peelable seals as shown in Fig. 2. For the best results, it is desirable that the thermal shrinkage properties of the film and the tray lip are similar.

One important feature of the repeating pattern of diamond-shaped elements is that for the standard seal widths (i.e. 5mm or more), a hermetic seal of the interior of the package will always be achieved, since the gaps between elements 30 where heat-fusing occurs provide such a continuous seal. The size of the elements may be altered to ensure that this is always the case, even if narrower seal widths were used. Furthermore, if a breathable seal is desired, the size and shape of element 30 could be altered in order to provide a path for gases through the seal.

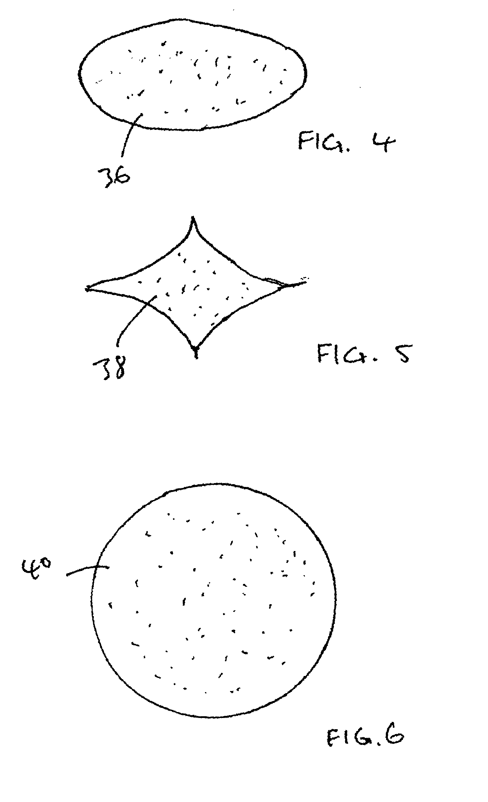

Although square and diamond-shaped elements 30 are currently the most preferred shape, in other embodiments, oval or elliptical elements 36 may be printed on the film as illustrated in Fig. 4, or a diamond-shape 38 with concave edges may be used as shown in Fig. 5 or a circular element 40 may be used as shown in Fig. 6.

It will be appreciated that the present invention enables packaging to be produced that has both peelable seals and meets the EU Norm EN 13432 for biodegradable and compostable packaging materials since in excess of 95% of the package is from sustainable, renewable and compostable sources, and none of the remaining non-biodegradable constituent parts of the package, including the lacquer, exceeds more than 1% of the total packaging weight.

It will be understood that numerous changes may be made with the scope of the present invention, in particular, the shape of the heat-resistant lacquer element may be altered to a chevron, for example, the heat sealing parameters may be adjusted according to the particular characteristics of the sealing film, and alternative methods for applying the coating may be used.

## Claims

1. A polymerised lactic acid resin film (12) for use in product packaging, the film comprising a peelable region configured to form a peelable connection to a polymerised lactic acid resin substrate when brought into contact and upon heating, the region comprising an intermittent heat-resistant coating (30, 36, 38, 40) to prevent heat sealing occurring in part of the region, so as to permit a subsequent separation of the film from the substrate by a peeling mechanism.

2. A polymerised lactic acid resin film according to claim 1 wherein the intermittent coating comprises an array of discrete coating elements (30, 36, 38, 40).

3. A polymerised lactic acid resin film according to claim 2 wherein the coating elements (30, 36, 38, 40) are regularly shaped and/or regularly spaced, preferably wherein spacing and shape of the elements provides for a hermetically sealed connection above a predetermined region width.

4. A polymerised lactic acid resin film according to claim 2 or claim 3 wherein the elements (30) are a square or diamond shape.

5. A polymerised lactic acid resin film according to any preceding claim wherein the ratio of coated area to non-coated area is in a range of 1:2 to : 1:0.75, preferably wherein the ratio is 1:1.5 to 1:1 even more preferably wherein the ratio is 1:1.2 to 1:1.3.

6. A polymerised lactic acid resin film according to any preceding claim wherein the coating is a lacquer, preferably wherein the lacquer is a nitrocellulose/polyurethane lacquer.

7. A packaging article (10, 20) comprising a polymerised lactic acid resin film according to any preceding claim arranged to provide a peelable seal to a substrate.

8. A method of manufacturing a polymerised lactic acid resin film having a peelable region (14, 16, 18, 24), the method comprising the step of applying an intermittent heat resistant coating to the film to provide the region, preferably wherein the coating is applied in a flexographic or gravure process.

9. A method of forming a peelable seal between a polymerised lactic acid resin film (12, 26) and a substrate (12, 22), the method comprising the step of manufacturing a polymerised lactic acid resin film according to claim (8) and further comprising the steps of placing the film in a face contacting relationship with a substrate against which the peelable seal is to be formed and heat sealing the film to substrate.

10. A method according to claim 9 wherein the heat seal temperature is in the range of 95 to 115°C.

11. A method according to claim 9 or claim 10 wherein the heat seal pressure is in the range of 1 to 7 bar.

12. A method according to any one of claims 9 to 11 wherein the dwell time is in the range of 0.3 to 1 secs.
